# EUROPEAN PATENT APPLICATION

(11) **EP 4 851 954 A1**
(43) Date of publication of application: **09.12.2026**
(21) Application number: 26214298.7
(22) Date of filing: 23.08.2021
(51) Int. Cl.: G06V 10/82, G06V 10/25, G06V 10/46

(54) **MACHINE LEARNING BASED DISTRACTION CLASSIFICATION IN IMAGES**

(62) Document number(s) of the earlier application(s) in accordance with Art. 76 EPC: 21770363.6 / 4 377 902
(71) Applicant: Google LLC, Mountain View, CA 94043 (US)
(72) Inventor: Orly, LIBA, Mountain View, 94043 (US); MILNE, Michael Garth, Mountain View, 94043 (US); SARMA, Navin Padman, Mountain View, 94043 (US); KUKLIANSKY, Doron, Mountain View, 94043 (US); CHEN, Huizhong, Mountain View, 94043 (US); KNAAN, Yael Pritch, Mountain View, 94043 (US)
(74) Representative: Thorniley, Peter

(57) **Abstract**

A method includes receiving training data comprising a plurality of images, one or more identified objects in each of the plurality of images, and a detection score associated with each of the one or more identified objects, wherein the detection score for an object is indicative of a degree to which a portion of an image corresponds to the object. The method also includes training a neural network based on the training data to predict a distractor score for at least one object of the one or more identified objects in an input image, wherein the at least one object is selected based on an associated detection score, and wherein the distractor score for the at least one object is indicative of a perceived visual distraction caused by a presence of the at least one object in the input image. The method additionally includes outputting the trained neural network.

## Description

### BACKGROUND

Many modern computing devices, such as mobile phones, personal computers, and tablets, include image capture devices, such as still and/or video cameras. The image capture devices can capture images, such as images that include people, animals, landscapes, and/or objects. The present disclosure relates generally to processing of images via a camera preview feature, as well as to post-processing of captured images.

### SUMMARY

Aspects of the subject technology relate to processing of images or videos. The image or video may be available, for example, via a camera preview feature, or as a captured image or video as viewed via an image viewing application. One or more objects in an image or a video may be identified as a potential distractor. A user can then initiate an object removal task that removes the distracting object from the image or video, and generate an edited image or video. Also, for example, one or more primary objects in an image or a video can be identified, and technical controls can be applied to prevent modification of the one or more primary objects. Editing images manually, for example, to remove a distracting object, and/or add local, image specific object control features, can be a time-consuming and resource-heavy task. Machine learning based techniques described herein enable efficient processing of images, and enable user control over the editing process. In some aspects, the described techniques may enable a user to capture images and videos that are of higher image quality by allowing the user to remove distracting objects prior to image capture, while the image is being previewed. In other aspects, the described techniques may enable a user to perform post-capture processing of an image. In yet other aspects, the described techniques may automatically enhance the quality of an image by highlighting a main subject, and/or removing distracting objects.

Accordingly, in a first example embodiment, a computer-implemented method is provided that includes receiving, by a computing device, training data comprising a plurality of images, one or more identified objects in each of the plurality of images, and a detection score associated with each of the one or more identified objects, wherein the detection score for an object is indicative of a degree to which a portion of an image corresponds to the object. The computer-implemented method also includes training a neural network based on the training data to predict a distractor score for at least one object of the one or more identified objects in an input image, wherein the at least one object is selected based on an associated detection score, and wherein the distractor score for the at least one object is indicative of a perceived visual distraction caused by a presence of the at least one object in the input image. The computer-implemented method additionally includes outputting the trained neural network.

In a second example embodiment, a device is provided that includes one or more processors. The device further includes data storage. The data storage has stored thereon computer-executable instructions that, when executed by the one or more processors, cause the computing device to carry out operations. The operations include receiving, by a computing device, training data comprising a plurality of images, one or more identified objects in each of the plurality of images, and a detection score associated with each of the one or more identified objects, wherein the detection score for an object is indicative of a degree to which a portion of an image corresponds to the object. The operations also include training a neural network based on the training data to predict a distractor score for at least one object of the one or more identified objects in an input image, wherein the at least one object is selected based on an associated detection score, and wherein the distractor score for the at least one object is indicative of a perceived visual distraction caused by a presence of the at least one object in the input image. The operations additionally include outputting the trained neural network.

In a third example embodiment, an article of manufacture including a non-transitory computer-readable medium is provided having stored thereon program instructions that, upon execution by one or more processors of a computing device, cause the computing device to carry out operations. The operations include receiving, by a computing device, training data comprising a plurality of images, one or more identified objects in each of the plurality of images, and a detection score associated with each of the one or more identified objects, wherein the detection score for an object is indicative of a degree to which a portion of an image corresponds to the object. The operations also include training a neural network based on the training data to predict a distractor score for at least one object of the one or more identified objects in an input image, wherein the at least one object is selected based on an associated detection score, and wherein the distractor score for the at least one object is indicative of a perceived visual distraction caused by a presence of the at least one object in the input image. The operations additionally include outputting the trained neural network.

In a fourth example embodiment, a system is provided that includes means for receiving, by a computing device, training data comprising a plurality of images, one or more identified objects in each of the plurality of images, and a detection score associated with each of the one or more identified objects, wherein the detection score for an object is indicative of a degree to which a portion of an image corresponds to the object. The system also includes means for training a neural network based on the training data to predict a distractor score for at least one object of the one or more identified objects in an input image, wherein the at least one object is selected based on an associated detection score, and wherein the distractor score for the at least one object is indicative of a perceived visual distraction caused by a presence of the at least one object in the input image. The system additionally includes means for outputting the trained neural network.

In a fifth example embodiment, a computer-implemented method is provided that includes receiving, by a computing device, an input image. The computer-implemented method also includes identifying one or more objects in the input image. The computer-implemented method additionally includes generating a bounding region for each of the one or more objects, wherein the bounding region is associated with region coordinates indicative of a location and a size of the bounding region in the input image. The computer-implemented method also includes applying a neural network to predict a distractor score for each of the one or more objects, wherein the distractor score for an object of the one or more objects is indicative of a perceived visual distraction caused by a presence of the object in the input image, the neural network having been trained on training data comprising a plurality of images, one or more identified objects in each of the plurality of images, and a detection score associated with each of the one or more identified objects, wherein the detection score is indicative of a degree to which a portion of an image corresponds to an object in an image. The computer-implemented method additionally includes providing the predicted distractor score for each of the one or more objects in the input image.

In a sixth example embodiment, a device is provided that includes one or more processors. The device further includes data storage. The data storage has stored thereon computer-executable instructions that, when executed by the one or more processors, cause the computing device to carry out operations. The operations include receiving, by the computing device, an input image. The operations also include identifying one or more objects in the input image. The operations additionally include generating a bounding region for each of the one or more objects, wherein the bounding region is associated with region coordinates indicative of a location and a size of the bounding region in the input image. The operations further include applying a neural network to predict a distractor score for each of the one or more objects, wherein the distractor score for an object of the one or more objects is indicative of a perceived visual distraction caused by a presence of the object in the input image, and the neural network having been trained on training data comprising a plurality of images, one or more identified objects in each of the plurality of images, and a detection score associated with each of the one or more identified objects, wherein the detection score is indicative of a degree to which a portion of an image corresponds to an object in an image. The operations additionally include providing the predicted distractor score for each of the one or more objects in the input image.

In a seventh example embodiment, an article of manufacture including a non-transitory computer-readable medium is provided having stored thereon program instructions that, upon execution by one or more processors of a computing device, cause the computing device to carry out operations. The operations include receiving, by the computing device, an input image. The operations also include identifying one or more objects in the input image. The operations additionally include generating a bounding region for each of the one or more objects, wherein the bounding region is associated with region coordinates indicative of a location and a size of the bounding region in the input image. The operations further include applying a neural network to predict a distractor score for each of the one or more objects, wherein the distractor score for an object of the one or more objects is indicative of a perceived visual distraction caused by a presence of the object in the input image, and the neural network having been trained on training data comprising a plurality of images, one or more identified objects in each of the plurality of images, and a detection score associated with each of the one or more identified objects, wherein the detection score is indicative of a degree to which a portion of an image corresponds to an object in an image. The operations additionally include providing the predicted distractor score for each of the one or more objects in the input image.

In an eighth example embodiment, a system is provided that includes means for receiving, by a computing device, an input image. The system also includes means for identifying one or more objects in the input image. The system additionally includes means for generating a bounding region for each of the one or more objects, wherein the bounding region is associated with region coordinates indicative of a location and a size of the bounding region in the input image. The system further includes means for applying a neural network to predict a distractor score for each of the one or more objects, wherein the distractor score for an object of the one or more objects is indicative of a perceived visual distraction caused by a presence of the object in the input image, the neural network having been trained on training data comprising a plurality of images, one or more identified objects in each of the plurality of images, and a detection score associated with each of the one or more identified objects, wherein the detection score is indicative of a degree to which a portion of an image corresponds to an object in an image. The system also includes means for providing the predicted distractor score for each of the one or more objects in the input image.

It is understood that other configurations of the subject technology will become readily apparent to those skilled in the art from the following detailed description, where various configurations of the subject technology are shown and described by way of illustration. As will be realized, the subject technology is capable of other and different configurations and its several details are capable of modification in various other respects, all without departing from the scope of the subject technology. Accordingly, the drawings and detailed description are to be regarded as illustrative in nature and not as restrictive.

### BRIEF DESCRIPTION OF THE DRAWINGS

The accompanying drawings, which are included to provide further understanding and are incorporated in and constitute a part of this specification, illustrate disclosed aspects and together with the description serve to explain the principles of the disclosed aspects.
Figure 1A illustrates an example training phase of a neural network model, in accordance with example embodiments.
Figure 1B illustrates an example inference phase of a neural network model, in accordance with example embodiments.
Figure 2 is an example illustration of predicted distractor scores, in accordance with example embodiments.
Figure 3 is another example illustration of predicted distractor scores, in accordance with example embodiments.
Figure 4 depicts example illustrations of predicted distractor scores, in accordance with example embodiments.
Figure 5 is a diagram illustrating a training phase and an inference phase of a machine learning model, in accordance with example embodiments.
Figure 6 is a block diagram of a computing device, in accordance with example embodiments.
Figure 7 depicts a distributed computing architecture, in accordance with example embodiments
Figure 8 depicts a network of computing clusters arranged as a cloud-based server system, in accordance with example embodiments.
Figure 9 is a flow chart illustrating an example training of a neural network, in accordance with example embodiments.
Figure 10 is a flow chart illustrating an example predicting by a trained neural network, in accordance with example embodiments.

### DETAILED DESCRIPTION

Example methods, devices, and systems are described herein. It should be understood that the words "example" and "exemplary" are used herein to mean "serving as an example, instance, or illustration." Any embodiment or feature described herein as being an "example" or "exemplary" is not necessarily to be construed as preferred or advantageous over other embodiments or features. Other embodiments can be utilized, and other changes can be made, without departing from the scope of the subject matter presented herein.

Thus, the example embodiments described herein are not meant to be limiting. Aspects of the present disclosure, as generally described herein, and illustrated in the figures, can be arranged, substituted, combined, separated, and designed in a wide variety of different configurations, all of which are contemplated herein.

Further, unless context suggests otherwise, the features illustrated in each of the figures may be used in combination with one another. Thus, the figures should be generally viewed as component aspects of one or more overall embodiments, with the understanding that not all illustrated features are necessary for each embodiment.

### Overview

Images or videos may include objects that can distract from a main theme of the image or the video. For example, an image of a lead singer may include background objects that distract from a focus on the lead singer. Also, for example, an image of a child may include objects in the environment that may distract from a focus on the child. For example, a shiny, reflective object may take a viewer's attention away from the child. Some images may include one or more bystanders in addition to a main subject of the image. Removal of such potentially distracting persons, and/or objects may improve a quality of an image by focusing a viewer's attention on an intended main subject of the image. Also, for example, removal of a main subject from an image may not be desirable. Accordingly, it may be useful to identify one or more objects that are of high significance in an image, and add adequate controls to prevent inadvertent removal of such objects that are of high significance.

In accordance with one or more implementations, methods and systems for processing an image are herein disclosed. According to various aspects of the subject technology, distracting objects may be identified in a captured image or a preview of an image prior to image capture. In some aspects of the subject technology, a user may be provided with an option to remove the identified distracting objects. In some aspects, the identified distracting objects may be automatically removed.

### Example Machine Learning Models

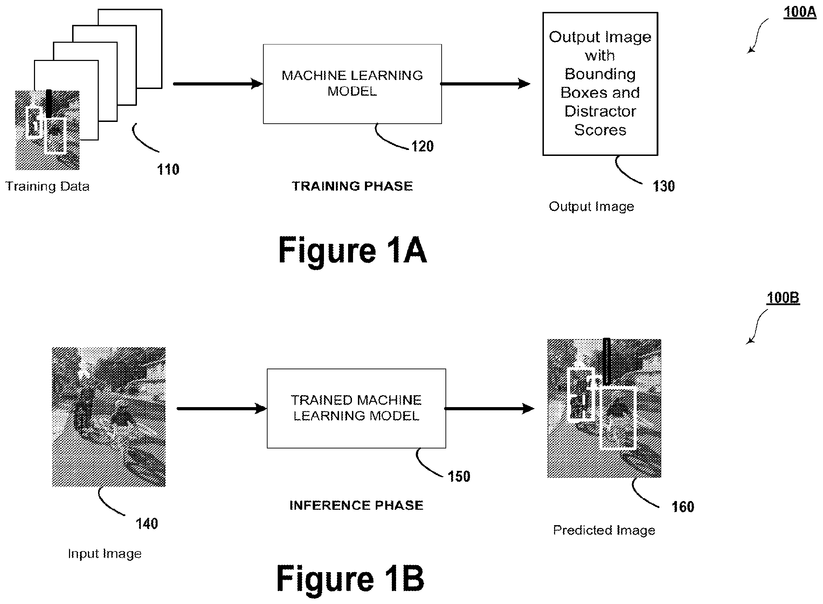

Figure 1A illustrates an example training phase of a neural network model 100A, in accordance with example embodiments. In some embodiments, training data 110 may be received. Training data 110 may include a plurality of images, one or more identified objects in each of the plurality of images, and a detection score associated with each of the one or more identified objects. The detection score for an object may be indicative of a degree to which a portion of an image corresponds to the object. A higher detection score associated with an identified object is indicative of a higher degree of certainty that the portion of the image corresponds to the identified object. A lower detection score associated with an identified object is indicative of a lower degree of certainty that the portion of the image corresponds to the identified object.

Generally, there may be a plurality of factors that may have a bearing on an accuracy of object detection in an image. For example, environmental illumination, types of backgrounds, a composition of a scene, lens and/or camera characteristics that may cause objects in an image to be distorted, motion blur, perspective distortions, and so forth. In some embodiments, training data 110 may be received from an object detection neural network. For example, a trained neural network may take as input an image, and output the image with one or more identified objects in the image, and a detection score associated with each of the one or more identified objects. For example, the trained neural network can be an object detection model such as a Region-Based Convolutional Neural Network (R-CNN), Fast R-CNN, YOLO (You Only Look Once), and so forth. In some embodiments, the object detection network may be a MobileNetV2 backbone for feature extraction and a Feature Pyramid Network (FPN) lite object detection head. In some embodiments, machine learning model 120 may be trained to perform object detection and output a detection score. In some embodiments, the object detection model can extract a location of an object and associate a detection score with the object. Also, for example, the object detection model can provide box embeddings for one or more objects in the image. Additional, and/or alternative information may be provided by the object detection model.

In some embodiments, machine learning model 120 may be trained based on training data 110 to predict a distractor score for at least one object of the one or more identified objects in an input image. The at least one object may be selected based on an associated detection score. The distractor score for the at least one object may be indicative of a perceived visual distraction caused by a presence of the at least one object in the input image. For example, one or more objects with a detection score higher than a threshold detection score may be selected as candidate objects for distraction classification. Generally, distraction classification may classify an object in an image as a distractor. In some embodiments, distraction classification may rank one or more objects in an image based on a degree of distraction, such as, for example, as indicated by the distractor score for the one or more objects.

In training machine learning model 120, a list of all object regions in an image, together with their corresponding detection scores, may be input. An object region may be defined based on region coordinates of a bounding region, such as, for example, a rectangle, a circle, an oval, and so forth. The object region may be of any geometrical shape, such as, for example, a rectangular bounding box that includes an identified object. In such an example, four coordinates of the bounding box (*e.g*., *y*_min, *x*_min, *y*_max, *x*_max) may define the object region. As another example, the object region may be a circular bounding region that includes an identified object, and the region coordinates may include a center and a radius of the bounding circle. As indicated previously, the detection score may be extracted from an object detection network.

In some embodiments, the one or more identified objects in each of the plurality of images may be located within respective bounding regions, wherein a bounding region may be associated with region coordinates indicative of a location and a size of the bounding region in the input image. In such embodiments, the training of the neural network to predict the distractor score for the given object may be based on region coordinates of a bounding region corresponding to the at least one object.

In some embodiments, bounding regions may be considered independently, and distraction classification may be modeled as *N* independent classification problems. Each classification problem may either be solved using a linear model on top of one or more engineered features (*e.g*., box area and a distance from the center), or a standard neural network model. For example, such a process may allow machine learning model 120 to learn that distractors may be small, and may be close to the borders of an image.

In some embodiments, the training of the neural network to predict the distractor score for the at least one object may be based on pairwise relations between region coordinates of a bounding region corresponding to the at least one object and region coordinates of another bounding region corresponding to another object of one or more identified objects in the input image. For example, distraction classification may be modeled as *N* independent classification problems, where the input for an *i*^{th} problem may include features of the *i*^{th} bounding region, and also include features of other bounding regions. Such a process may allow machine learning model 120 to learn that distractors may not necessarily be small, but that the distractors may be likely smaller than other persons or main objects in the same image.

In some embodiments, distraction classification may not be modeled as *N* independent classification problems In such an approach, each of the *N* problems may be initially solved, and a most likely solution may be selected. Subsequently, conditioned on this new solution, features of the other classification problems may be updated. The process may then be repeated for the remaining *N-1* problems until all the problems are recursively solved. This corresponds to a greedy algorithm.

In some embodiments, distraction classification may be modeled as a Conditional Random Field (CRF). A CRF is a type of statistical modeling that may be used for structured prediction. Generally, a classifier may predict a label for a sample without considering an environment in which the sample exists. However, a CRF generates labels based on a context of the sample. In some embodiments, a plurality of dependencies between two or more samples may be utilized to generate labels. Generally, in image processing, two objects that are in similar locations may have similar predicted labels, whereas two objects in different locations in an image may have different predicted labels.

For example, a CRF with singleton and/or pairwise potentials may be utilized. As described herein, pairwise relations between region coordinates (*e.g*., size and location) may be used to perform distraction classification. Also, for example, a CRF may be based on an underlying assumption that distractors may not necessarily be small, but that they may be small relative to other objects of interest in an image. With such a formulation, a solution to the *N* problems may be approximated simultaneously, thereby avoiding a potentially non-optimal solution that a greedy algorithm may converge to.

In some embodiments, an identified object of the one or more identified objects may be associated with a rating of not distractive, unsure, distractive, or highly distractive. In such embodiments, the training of the neural network may include learning to predict the distractor score based on the rating. For example, machine learning model 120 may receive an image with identified objects and corresponding bounding regions. Training data 110 may include labeled data. For example, one or more images of training data 110 may include a label that indicates one or more objects in an image of training data 110 as a main subject of the corresponding image. Also, for example, an object in an image of training data 110 may be labeled as "not distractive," "unsure," "distractive," or "highly distractive." In some embodiments, the label may correspond to a score, such as, for example, a score between 0 and 1. For example, a "highly distractive" label may correspond to a score of "1", a "distractive" label may correspond to a score of "0.6", an "unsure" label may correspond to a score of "0.3", and a "not distractive" label may correspond to a score of "0". In some embodiments, predicted distractor scores may be a list of scores between 0 and 1. Generally, a higher distractor score (*e.g*., close to 1) is indicative of a high likelihood that an identified object is a distractor. Also, for example, a lower distractor score (*e.g*., close to 0) is indicative of a low likelihood that an identified object is a distractor. In some embodiments, the score may be a normalized score. Also, although the illustrative example corresponds to four discrete ratings, more or fewer ratings may be used. In some embodiments, the ratings may not be discrete, and the score may be represented as a continuous spectrum.

Upon training, machine learning model 120 may provide output image 130. In some embodiments, output image 130 may include one or more bounding regions indicative of an object, and a distractor score associated with the object. In some embodiments, machine learning model 120 may determine, based on the predicted distractor score, whether the at least one object is an object of high significance in the input image. As indicated, labeled data may include images where one or more objects are labeled as objects of high significance. Accordingly, machine learning model 120 may learn to predict whether an object is an object of high significance in the input image. In some embodiments, one or more objects with a distractor score less than a threshold distractor score may be predicted as objects of high significance.

Figure 1B illustrates an example inference phase of a neural network model 100B, in accordance with example embodiments. In some embodiments, input image 140 may be received and one or more objects may be identified in input image 140. In some embodiments, the identifying of the one or more objects may include identifying the one or more objects by an object detection neural network. For example, an object detection model may be used to perform tasks related to object detection in input image 140. In some embodiments, trained machine learning models may perform tasks related to object detection. Although the examples and description herein are based on single images, the same techniques may be applied to a sequence of images, such as, for example, a sequence of images in a video stream. Accordingly, in some embodiments, input image 140 may be a video comprising a plurality of video frames.

In some embodiments, a bounding region may be generated for each of the one or more objects, where the bounding region may be associated with region coordinates indicative of a location and a size of the bounding region in the input image. For example, the region coordinates (*e.g*., box coordinates) may indicate that the bounding region is a large box located toward a center of input image 140. As another example, the region coordinates may indicate that the bounding region is one of relatively smaller boxes among bounding regions corresponding to the one or more objects, and/or that the bounding region is located toward a boundary of input image 140.

The term "bounding region" as used herein may be any geometrical shape. The term "region coordinates" may be any set of characteristics that may be used to define the bounding region. For example, the bounding region may be a rectangular box and the region coordinates may be the coordinates of the four corners of the box. As another example, the region coordinates may be a size, position, and relative angles between diagonals of the rectangular box. In some embodiments, the region coordinates may be an area and coordinates of a point of intersection of the diagonals of the box. As another example, the bounding region may be a circle and the region coordinates may be a center and a radius of the circle. As another example, the bounding region may be a circle and the region coordinates may be a center and an area or a perimeter of the circle. Additional and/or alternative bounding regions and region coordinates may be used. For example, the bounding region may be a bounded closed planar region, and the region coordinates may be an area of the region and a centroid of the region.

In some embodiments, a neural network may be applied to predict a distractor score for each of the one or more objects. As previously described, the distractor score for an object of the one or more objects may be indicative of a perceived visual distraction caused by a presence of the object in the input image. Also, as described herein, the neural network may have been trained on training data (*e.g*., training data 110) that includes a plurality of images, one or more identified objects in each of the plurality of images, and a detection score associated with each of the one or more identified objects, where the detection score is indicative of a degree to which a portion of an image corresponds to an object in an image.

For example, trained machine learning model 150 may receive input image 140. In some embodiments, input image 140 may include bounding regions for each of the one or more identified objects, along with respective detection scores. In some aspects, trained machine learning model 150 may select, from the one or more identified objects, objects that have a detection score higher than a detection threshold. This would indicate that the selected objects have a high likelihood of corresponding to objects in input image 140. In some embodiments, trained machine learning model 150 may predict a distractor score for each of the selected objects.

In some embodiments, the applying of the neural network to predict the distractor score may be based on a conditional random field that models a context of an object in the input image. As described previously, distraction classification may be modeled as a Conditional Random Field (CRF). For example, a CRF with singleton and/or pairwise potentials may be utilized. As described herein, pairwise relations between region coordinates (*e.g*., size & location) may be used to perform distraction classification. Also, for example, a CRF may be based on an underlying assumption that distractors may not necessarily be small, but that they are small relative to other objects of interest in an image. For example, an object in a smaller box (relative to other boxes), located toward a periphery of input image 140 may be associated with a high distractor score.

In some embodiments, the predicted distractor score for a given object of the one or more objects may be based on a region coordinate of a bounding region corresponding to the given object. For example, the region coordinates (*e.g*., box coordinates) may indicate that the bounding region is a large box located toward a center of input image 140, and trained machine learning model 150 may predict a low distractor score for the object corresponding to the bounding region. As another example, the region coordinates may indicate that the bounding region is a small box located toward a periphery of input image 140, and trained machine learning model 150 may predict a high distractor score for the object corresponding to the bounding region.

In some embodiments, the predicted distractor score for a given object of the one or more objects may be based on pairwise relations between region coordinates of a bounding region corresponding to the given object and region coordinates of another bounding region corresponding to another object of one or more identified objects in the input image. For example, the region coordinates may indicate that the bounding region is one of relatively smaller boxes among bounding boxes corresponding to the one or more objects, and trained machine learning model 150 may predict a high distractor score for the object corresponding to the bounding region.

In some embodiments, trained machine learning model 150 may output a predicted image 160, where predicted image 160 includes the predicted distractor score for each of the selected objects in input image 140. In some embodiments, the providing of the predicted distractor score may include providing input image 140 with the one or more objects within respective bounding regions.

In some embodiments, trained machine learning model 150 may identify, based on the predicted distractor score, an object, of the one or more objects, of high significance in input image 140. Generally, a low distractor score for an object indicates that the object has a low likelihood of being a distractor, and the object may be identified as an object of high significance. In some embodiments, the identifying of the object of high significance may be based on a determination that a predicted distractor score for the object is below a threshold score. For example, when a predicted distractor score associated with an object is below a distractor threshold, the corresponding object may be identified as an object of high significance. Also, for example, an object with a lowest distractor score may be identified as an object of high significance.

In some embodiments, an image editing parameter of a computing device may be adjusted to prevent removal of the object of high significance from input image 140. For example, a camera device may include edit features such as crop, delete, shade, remove, and so forth. For example, a crop feature may allow certain regions of an image to be cropped. As another example, an object removal feature may enable certain portions of an image to be selected and objects in such portions to be removed. Such edit features may be adjusted to prevent inadvertent deletion of a main subject of an image. For example, once an object of high significance is identified, locking mechanisms may be implemented to prevent such inadvertent deletion of the identified object of high significance.

In some embodiments, a computing device may provide, via a graphical user interface, a recommendation to lock the object of high significance from being edited. The computing device may receive user indication to lock the object of high significance from being edited. In response to the user indication, the computing device may modify the edit features of the computing device to lock the object of high significance from being edited.

In some embodiments, trained machine learning model 150 may identify, based on the predicted distractor score, an object, of the one or more objects, of low significance in input image 140. Generally, a high distractor score for an object indicates that the object has a high likelihood of being a distractor, and the object may be identified as an object of low significance. In some embodiments, the identifying of the object of low significance may be based on a determination that a predicted distractor score for the object is above a threshold score. For example, when a predicted distractor score associated with an object is above a second distractor threshold, the corresponding object may be identified as an object of low significance. Also, for example, an object with a highest distractor score may be identified as an object of low significance.

In some embodiments, a computing device may provide, via a graphical user interface, a recommendation to remove the object of low significance from input image 140. The computing device may receive user indication to remove the object of low significance from input image 140. In response to the user indication, the computing device may remove the object of low significance from input image 140.

In some embodiments, the removing of the object of low significance involves generating a segmentation mask of the object of low significance. For example, the computing device can generate a segmentation mask for the object of low significance in input image 140. In some embodiments, the segmentation mask may be provided to a use via the graphical user interface. Also, for example, the user indication to remove the object of low significance may be user selection of the segmentation mask.

In some embodiments, the removing of the object of low significance further involves inpainting a region of input image 140 corresponding to the object of low significance that was removed from input image 140. For example, subsequent to the removal of an object of low significance, the computing device may perform an inpainting procedure to fill in the affected portion of input image 140.

In some embodiments, the removing of the object of low significance further involves compositing the input image to maintain consistency with a background region of the input image. For example, subsequent to the removal of an object of low significance, the computing device may composite the affected portion of input image 140 to make it consistent with the background region of the input image. For example, the object of low significance may be a traffic light captured in a backdrop of a blue sky. Accordingly, subsequent to the removal of the traffic light, the computing device may composite input image 140 so that the blue sky in the backdrop replaces the removed traffic light.

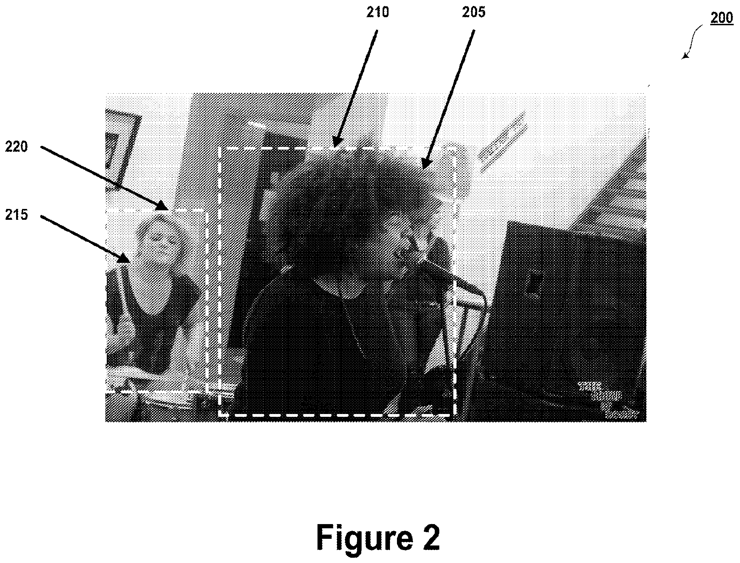

Figure 2 is an example illustration 200 of predicted distractor scores, in accordance with example embodiments. As illustrated, a singer 205 is enclosed in a first bounding box 210, and a drummer 215 in the background is enclosed in a second bounding box 220. In some embodiments, a trained machine learning model (*e.g*., trained machine learning model 150) may predict a distractor score for singer 205 to be 0.024, and predict a distractor score for drummer 215 to be 0.8528. In some embodiments, based on a comparison of the respective distractor scores, a trained machine learning model (*e.g*., trained machine learning model 150) may determine that singer 205 is an object of high significance (or a main subject of the image), because the distractor score of 0.024 associated with singer 205 is less than the distractor score of 0.8528 associated with drummer 215. In some embodiments, an image editing parameter of a computing device may be adjusted to prevent removal of singer 205 from the image. Also, for example, based on a comparison of the respective distractor scores, trained machine learning model (*e.g*., trained machine learning model 150) may determine that drummer 215 is an object of low significance (or a distractor), because the distractor score of 0.8528 associated with drummer 215 is more than the distractor score of 0.024 associated with singer 205. In some embodiments, an image editing parameter of a computing device may be configured to automatically remove drummer 215 from the image.

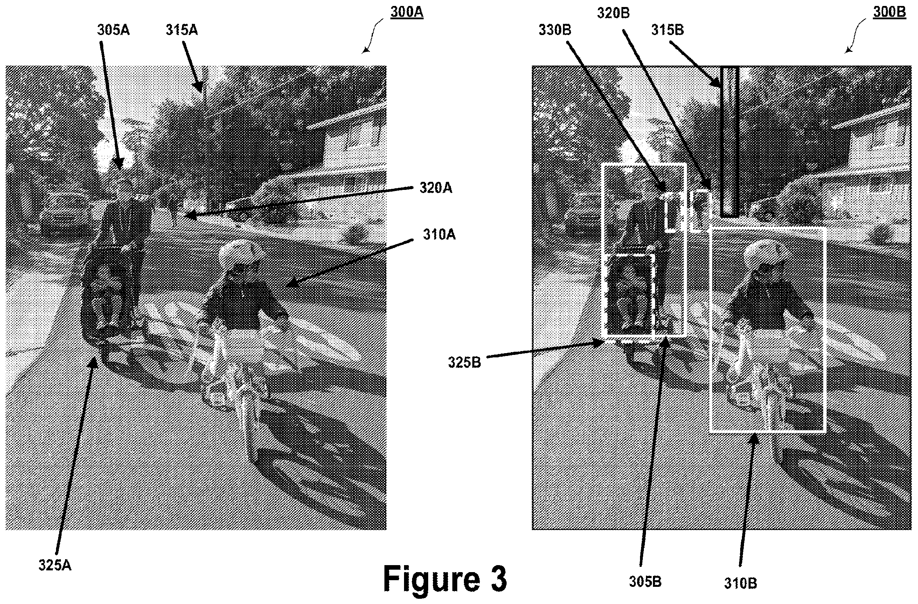

Figure 3 is another example illustration of predicted distractor scores, in accordance with example embodiments. Input image 300A includes an adult 305A pushing a stroller 325A with an infant seated in stroller 325A. Also shown in input image 300A is a child 310A riding a bicycle, a pole 315A, and a person 320A in the background. In some embodiments, a trained machine learning model (*e.g*., trained machine learning model 150) may receive input image 300A and provide output image 300B. As illustrated, output image 300B may be provided with one or more objects associated with respective distractor scores. Also, as illustrated, the distractor scores may not be output as numerical quantities. For example, the distractor score for an object may be indicated by a type of bounding box that encloses the object. In some embodiments, various color schemes may be utilized to represent different distractor scores. For example, a box with a green boundary may indicate an object with a high distractor score, and a box with a red boundary may indicate an object with a low distractor score. In some embodiments, various shapes of bounding regions may be utilized to represent different distractor scores. For example, a circular region may indicate an object with a high distractor score, and a rectangular region may indicate an object with a low distractor score. In some embodiments, a box with a dashed boundary may indicate an object with a high distractor score, and a box with a solid boundary may indicate an object with a low distractor score.

For example, as illustrated in output image 300B, bounding box 305B enclosing adult 305A, and bounding box 310B enclosing child 310A have solid boundaries, thereby indicating that adult 305A and child 310A are objects of high significance, or main subjects of the image. However, bounding box 325B enclosing stroller 325A, bounding box 320B enclosing person 320A in the background, and bounding box 330B enclosing a second person in the background have dashed boundaries, thereby indicating that stroller 325A, person 320A, and the second person are objects of low significance, or are not main subjects of the image. Also, for example, the trained machine learning model (*e.g*., trained machine learning model 150) may not label one or more objects in the image. For example, pole 315A is enclosed in bounding box 315B, which is unlabeled, or not associated with a distractor score.

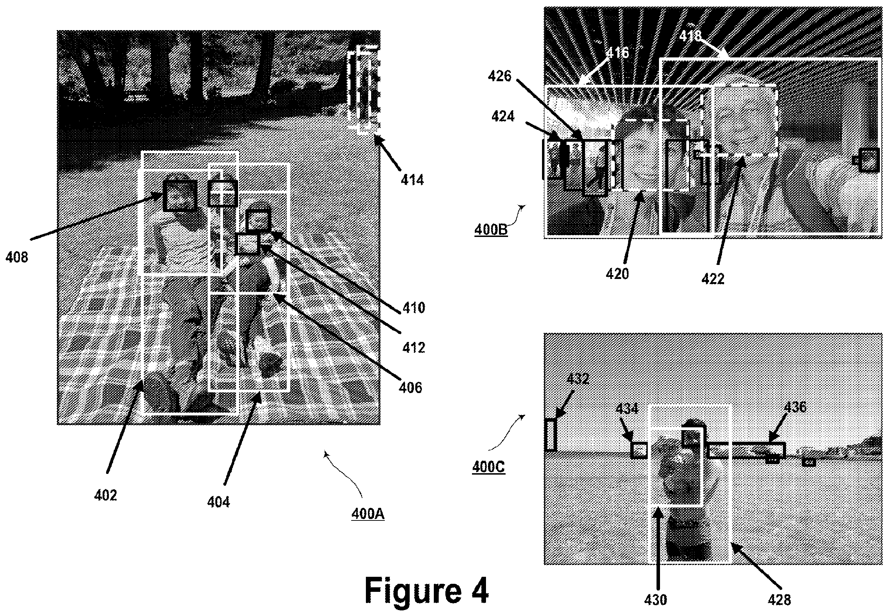

Figure 4 depicts example illustrations of predicted distractor scores, in accordance with example embodiments. First image 400A depicts a man enclosed by bounding box 402, a woman enclosed by bounding box 404, and a child enclosed by bounding box 406. Each of bounding boxes 402, 404, and 406 have solid boundaries, indicating low distractor scores. Accordingly, the man, the woman, and the child may be identified as objects of high significance, or main subjects of first image 400A. Also, as illustrated, bounding box 408 enclosing the man's face, bounding box 410 enclosing the child's face, and bounding box 412 enclosing the woman's hand may be unlabeled, or not associated with a distractor score. Also, for example, two persons are illustrated in the upper right corner of first image 400A, with both persons being enclosed by bounding boxes 414, which have dashed boundaries, indicating high distractor scores. Accordingly, the two persons may be identified as objects of low significance, or not main subjects of first image 400A.

As illustrated, the distractor score may be based on a position of the bounding box. Bounding boxes 402, 404, and 406 are located toward a center of first image 400A, thereby indicating that they may enclose objects of high significance. Likewise, bounding boxes 414 are located toward a periphery of first image 400A, thereby indicating that they may enclose objects of low significance. Also, as described herein, the distractor score may be based on a size of the bounding box. For example, bounding boxes 402, 404, and 406 are relatively larger than bounding boxes 414. Accordingly, objects enclosed in bounding boxes 402, 404, and 406 may be identified as objects of high significance, whereas objects enclosed in bounding boxes 414 may be identified as objects of low significance.

Second image 400B depicts a woman within a bounding box 416 and a man within a bounding box 418. Each of bounding boxes 416, and 418 have solid boundaries, indicating low distractor scores. Accordingly, the man, and the woman may be identified as objects of high significance, or main subjects of second image 400B. Also, for example, bounding box 420 encloses the woman's face and bounding box 422 encloses the man's face. Each of bounding boxes 420 and 422 have dashed boundaries, indicating that bounding boxes 420 and 422 are unlabeled, or not associated with a distractor score. Also, for example, bounding boxes 424 and 426 are shown to enclose persons in the background with a high distractor score. Accordingly, the persons in the background may be identified as objects of low significance in second image 400B.

Third image 400C depicts an adult enclosed in bounding box 428, holding an infant enclosed in bounding box 430. Bounding boxes 428 and 430 have solid boundaries, indicating low distractor scores. Accordingly, the adult, and the infant may be identified as objects of high significance, or main subjects of third image 400C. Also shown are a plurality of bounding boxes 432, 434, and 436, respectively enclosing objects in the background. Each of bounding boxes 432, 434, and 436 may be associated with high distractor scores. Accordingly, the objects in the background may be identified as objects of low significance in third image 400C. In some embodiments, such objects of low significance may be automatically removed from third image 400C. In some embodiments, subsequent to removal, third image 400C may be impainted to fill in for the removed objects. For example, third image 400C may be inpainted with a background of the sea and the sky. In some embodiments, bounding boxes 432, 434, and 436 may be provided as selectable boxes, and a user may exercise an option to choose whether or not to delete the corresponding objects.

### Training Machine Learning Models for Generating Inferences/Predictions

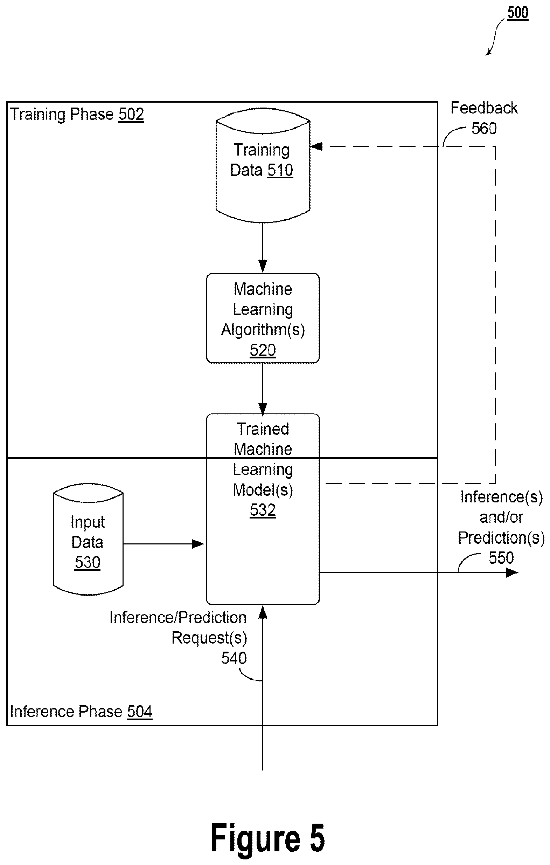

Figure 5 shows diagram 500 illustrating a training phase 502 and an inference phase 504 of trained machine learning model(s) 532, in accordance with example embodiments. Some machine learning techniques involve training one or more machine learning algorithms on an input set of training data to recognize patterns in the training data and provide output inferences and/or predictions about (patterns in the) training data. The resulting trained machine learning algorithm can be termed as a trained machine learning model. For example, Figure 5 shows training phase 502 where one or more machine learning algorithms 520 are being trained on training data 510 to become trained machine learning model 532. Then, during inference phase 504, trained machine learning model 532 can receive input data 530 and one or more inference/prediction requests 540 (perhaps as part of input data 530) and responsively provide as an output one or more inferences and/or predictions 550.

As such, trained machine learning model(s) 532 can include one or more models of one or more machine learning algorithms 520. Machine learning algorithm(s) 520 may include, but are not limited to: an artificial neural network (*e.g.,* a convolutional neural networks, a recurrent neural network, a Bayesian network, a hidden Markov model, a Markov decision process, a logistic regression function, a support vector machine, a suitable statistical machine learning algorithm, and/or a heuristic machine learning system). Machine learning algorithm(s) 520 may be supervised or unsupervised, and may implement any suitable combination of online and offline learning.

In some examples, machine learning algorithm(s) 520 and/or trained machine learning model(s) 532 can be accelerated using on-device coprocessors, such as graphic processing units (GPUs), tensor processing units (TPUs), digital signal processors (DSPs), and/or application specific integrated circuits (ASICs). Such on-device coprocessors can be used to speed up machine learning algorithm(s) 520 and/or trained machine learning model(s) 532. In some examples, trained machine learning model(s) 532 can be trained, reside and execute to provide inferences on a particular computing device, and/or otherwise can make inferences for the particular computing device.

During training phase 502, machine learning algorithm(s) 520 can be trained by providing at least training data 510 as training input using unsupervised, supervised, semi-supervised, and/or reinforcement learning techniques. Unsupervised learning involves providing a portion (or all) of training data 510 to machine learning algorithm(s) 520 and machine learning algorithm(s) 520 determining one or more output inferences based on the provided portion (or all) of training data 510. Supervised learning involves providing a portion of training data 510 to machine learning algorithm(s) 520, with machine learning algorithm(s) 520 determining one or more output inferences based on the provided portion of training data 510, and the output inference(s) are either accepted or corrected based on correct results associated with training data 510. In some examples, supervised learning of machine learning algorithm(s) 520 can be governed by a set of rules and/or a set of labels for the training input, and the set of rules and/or set of labels may be used to correct inferences of machine learning algorithm(s) 520.

Semi-supervised learning involves having correct results for part, but not all, of training data 510. During semi-supervised learning, supervised learning is used for a portion of training data 510 having correct results, and unsupervised learning is used for a portion of training data 510 not having correct results. Reinforcement learning involves machine learning algorithm(s) 520 receiving a reward signal regarding a prior inference, where the reward signal can be a numerical value. During reinforcement learning, machine learning algorithm(s) 520 can output an inference and receive a reward signal in response, where machine learning algorithm(s) 520 are configured to try to maximize the numerical value of the reward signal. In some examples, reinforcement learning also utilizes a value function that provides a numerical value representing an expected total of the numerical values provided by the reward signal over time. In some examples, machine learning algorithm(s) 520 and/or trained machine learning model(s) 532 can be trained using other machine learning techniques, including but not limited to, incremental learning and curriculum learning.

In some examples, machine learning algorithm(s) 520 and/or trained machine learning model(s) 532 can use transfer learning techniques. For example, transfer learning techniques can involve trained machine learning model(s) 532 being pre-trained on one set of data and additionally trained using training data 510. More particularly, machine learning algorithm(s) 520 can be pre-trained on data from one or more computing devices and a resulting trained machine learning model provided to a particular computing device, where the particular computing device is intended to execute the trained machine learning model during inference phase 504. Then, during training phase 502, the pre-trained machine learning model can be additionally trained using training data 510, where training data 510 can be derived from kernel and non-kernel data of the particular computing device. This further training of the machine learning algorithm(s) 520 and/or the pre-trained machine learning model using training data 510 of the particular computing device's data can be performed using either supervised or unsupervised learning. Once machine learning algorithm(s) 520 and/or the pre-trained machine learning model has been trained on at least training data 510, training phase 502 can be completed. The trained resulting machine learning model can be utilized as at least one of trained machine learning model(s) 532.

In particular, once training phase 502 has been completed, trained machine learning model(s) 532 can be provided to a computing device, if not already on the computing device. Inference phase 504 can begin after trained machine learning model(s) 532 are provided to the particular computing device.

During inference phase 504, trained machine learning model(s) 532 can receive input data 530 and generate and output one or more corresponding inferences and/or predictions 550 about input data 530. As such, input data 530 can be used as an input to trained machine learning model(s) 532 for providing corresponding inference(s) and/or prediction(s) 550 to kernel components and non-kernel components. For example, trained machine learning model(s) 532 can generate inference(s) and/or prediction(s) 550 in response to one or more inference/prediction requests 540. In some examples, trained machine learning model(s) 532 can be executed by a portion of other software. For example, trained machine learning model(s) 532 can be executed by an inference or prediction daemon to be readily available to provide inferences and/or predictions upon request. Input data 530 can include data from the particular computing device executing trained machine learning model(s) 532 and/or input data from one or more computing devices other than CD1.

Input data 530 can include a collection of images provided by one or more sources. The collection of images can include images of various objects, such as humans, a human face, animals, flowers, trains, images of multiple objects, images resident on the particular computing device, and/or other images. Other types of input data are possible as well.

Inference(s) and/or prediction(s) 550 can include predicted distractor scores, bounding regions indicative of distractor scores, predicted objects of high significance, predicted objects of low significance, and/or other output data produced by trained machine learning model(s) 532 operating on input data 530 (and training data 510). In some examples, trained machine learning model(s) 532 can use output inference(s) and/or prediction(s) 550 as input feedback 560. Trained machine learning model(s) 532 can also rely on past inferences as inputs for generating new inferences.

Convolutional neural networks can be examples of machine learning algorithm(s) 520. After training, the trained version of convolutional neural networks can be examples of trained machine learning model(s) 532. In this approach, an example of inference / prediction request(s) 540 can be a request to predict an object of high significance in an input image and a corresponding example of inferences and/or prediction(s) 550 can be a predicted low distractor score, and/or a predicted object of high significance. Also, for example, an example of inference / prediction request(s) 540 can be a request to predict an object of low significance in an input image and a corresponding example of inferences and/or prediction(s) 550 can be a predicted high distractor score, and/or a predicted object of low significance.

In some examples, a given computing device can include the trained version of a convolutional neural network (*e.g*., trained machine learning model 150), perhaps after training convolutional neural networks (*e.g*., machine learning model 120). Then, the given computing device can receive requests to predict an object of high significance in input images, and use the trained version of convolutional neural networks (*e.g*., trained machine learning model 150) to generate output images.

In some examples, two or more computing devices can be used to provide output images; *e.g.,* a first computing device can generate and send requests to predict an object of high significance to a second computing device. Then, the second computing device can use the trained versions of convolutional neural networks (*e.g*., trained machine learning model 150), perhaps after training convolutional neural networks (*e.g*., machine learning model 120), to generate output images that predict the object of high significance, and respond to the requests from the first computing device for the output images. Then, upon reception of responses to the requests, the first computing device can provide the requested output images (*e.g.,* using a user interface and/or a display, a printed copy, an electronic communication, etc.).

### Computing Device Architecture

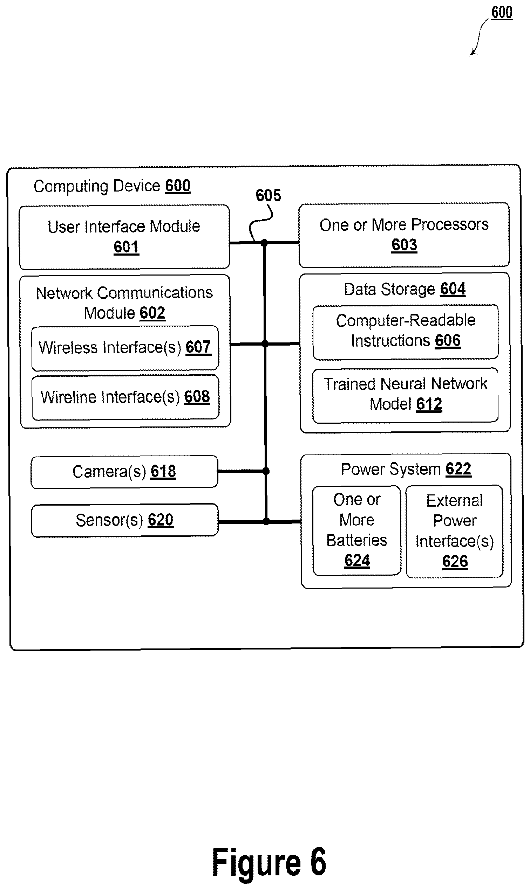

Figure 6 is a block diagram of an example computing device 600, in accordance with example embodiments. In particular, computing device 600 shown in Figure 6 can be configured to perform at least one function of and/or related to a machine learning model 120, a trained machine learning model 150, method 900, and/or method 1000.

Computing device 600 may include a user interface module 601, a network communications module 602, one or more processors 603, data storage 604, one or more cameras 618, one or more sensors 620, and power system 622, all of which may be linked together via a system bus, network, or other connection mechanism 605.

User interface module 601 can be operable to send data to and/or receive data from external user input/output devices. For example, user interface module 601 can be configured to send and/or receive data to and/or from user input devices such as a touch screen, a computer mouse, a keyboard, a keypad, a touch pad, a trackball, a joystick, a voice recognition module, and/or other similar devices. User interface module 601 can also be configured to provide output to user display devices, such as one or more cathode ray tubes (CRT), liquid crystal displays, light emitting diodes (LEDs), displays using digital light processing (DLP) technology, printers, light bulbs, and/or other similar devices, either now known or later developed. User interface module 601 can also be configured to generate audible outputs, with devices such as a speaker, speaker jack, audio output port, audio output device, earphones, and/or other similar devices. User interface module 601 can further be configured with one or more haptic devices that can generate haptic outputs, such as vibrations and/or other outputs detectable by touch and/or physical contact with computing device 600. In some examples, user interface module 601 can be used to provide a graphical user interface (GUI) for utilizing computing device 600.

Network communications module 602 can include one or more devices that provide one or more wireless interfaces 607 and/or one or more wireline interfaces 608 that are configurable to communicate via a network. Wireless interface(s) 607 can include one or more wireless transmitters, receivers, and/or transceivers, such as a Bluetooth^{™} transceiver, a Zigbee^{®} transceiver, a Wi-Fi^{™} transceiver, a WiMAX^{™} transceiver, an LTE^{™} transceiver, and/or other type of wireless transceiver configurable to communicate via a wireless network. Wireline interface(s) 608 can include one or more wireline transmitters, receivers, and/or transceivers, such as an Ethernet transceiver, a Universal Serial Bus (USB) transceiver, or similar transceiver configurable to communicate via a twisted pair wire, a coaxial cable, a fiber-optic link, or a similar physical connection to a wireline network.

In some examples, network communications module 602 can be configured to provide reliable, secured, and/or authenticated communications. For each communication described herein, information for facilitating reliable communications (*e.g.,* guaranteed message delivery) can be provided, perhaps as part of a message header and/or footer (*e.g.*, packet/message sequencing information, encapsulation headers and/or footers, size/time information, and transmission verification information such as cyclic redundancy check (CRC) and/or parity check values). Communications can be made secure (*e.g.*, be encoded or encrypted) and/or decrypted/decoded using one or more cryptographic protocols and/or algorithms, such as, but not limited to, Data Encryption Standard (DES), Advanced Encryption Standard (AES), a Rivest-Shamir-Adelman (RSA) algorithm, a Diffie-Hellman algorithm, a secure sockets protocol such as Secure Sockets Layer (SSL) or Transport Layer Security (TLS), and/or Digital Signature Algorithm (DSA). Other cryptographic protocols and/or algorithms can be used as well or in addition to those listed herein to secure (and then decrypt/decode) communications.

One or more processors 603 can include one or more general purpose processors, and/or one or more special purpose processors (*e.g.,* digital signal processors, tensor processing units (TPUs), graphics processing units (GPUs), application specific integrated circuits, etc.). One or more processors 603 can be configured to execute computer-readable instructions 606 that are contained in data storage 604 and/or other instructions as described herein.

Data storage 604 can include one or more non-transitory computer-readable storage media that can be read and/or accessed by at least one of one or more processors 603. The one or more computer-readable storage media can include volatile and/or non-volatile storage components, such as optical, magnetic, organic or other memory or disc storage, which can be integrated in whole or in part with at least one of one or more processors 603. In some examples, data storage 604 can be implemented using a single physical device (*e.g.,* one optical, magnetic, organic or other memory or disc storage unit), while in other examples, data storage 604 can be implemented using two or more physical devices.

Data storage 604 can include computer-readable instructions 606 and perhaps additional data. In some examples, data storage 604 can include storage required to perform at least part of the herein-described methods, scenarios, and techniques and/or at least part of the functionality of the herein-described devices and networks. In some examples, data storage 604 can include storage for a trained neural network model 612 (*e.g.,* trained machine learning model 150). In particular of these examples, computer-readable instructions 606 can include instructions that, when executed by processor(s) 603, enable computing device 600 to provide for some or all of the functionality of trained neural network model 612.

In some examples, computing device 600 can include one or more cameras 618. Camera(s) 618 can include one or more image capture devices, such as still and/or video cameras, equipped to capture one or more images or videos. The one or more images can be one or more still images and/or one or more images utilized in video imagery. Camera(s) 618 can capture light and/or electromagnetic radiation emitted as visible light, infrared radiation, ultraviolet light, and/or as one or more other frequencies of light.

In some examples, computing device 600 can include one or more sensors 620. Sensors 620 can be configured to measure conditions within computing device 600 and/or conditions in an environment of computing device 600 and provide data about these conditions. For example, sensors 620 can include one or more of: (i) sensors for obtaining data about computing device 600, such as, but not limited to, a thermometer for measuring a temperature of computing device 600, a battery sensor for measuring power of one or more batteries of power system 622, and/or other sensors measuring conditions of computing device 600; (ii) an identification sensor to identify other objects and/or devices, such as, but not limited to, a Radio Frequency Identification (RFID) reader, proximity sensor, one-dimensional barcode reader, two-dimensional barcode (*e.g.,* Quick Response (QR) code) reader, and a laser tracker, where the identification sensors can be configured to read identifiers, such as RFID tags, barcodes, QR codes, and/or other devices and/or object configured to be read and provide at least identifying information; (iii) sensors to measure locations and/or movements of computing device 600, such as, but not limited to, a tilt sensor, a gyroscope, an accelerometer, a Doppler sensor, a GPS device, a sonar sensor, a radar device, a laser-displacement sensor, and a compass; (iv) an environmental sensor to obtain data indicative of an environment of computing device 600, such as, but not limited to, an infrared sensor, an optical sensor, a light sensor, a biosensor, a capacitive sensor, a touch sensor, a temperature sensor, a wireless sensor, a radio sensor, a movement sensor, a microphone, a sound sensor, an ultrasound sensor and/or a smoke sensor; and/or (v) a force sensor to measure one or more forces (*e.g.*, inertial forces and/or G-forces) acting about computing device 600, such as, but not limited to one or more sensors that measure: forces in one or more dimensions, torque, ground force, friction, and/or a zero moment point (ZMP) sensor that identifies ZMPs and/or locations of the ZMPs. Many other examples of sensors 620 are possible as well.

Power system 622 can include one or more batteries 624 and/or one or more external power interfaces 626 for providing electrical power to computing device 600. Each battery of the one or more batteries 624 can, when electrically coupled to the computing device 600, act as a source of stored electrical power for computing device 600. One or more batteries 624 of power system 622 can be configured to be portable. Some or all of one or more batteries 624 can be readily removable from computing device 600. In other examples, some or all of one or more batteries 624 can be internal to computing device 600, and so may not be readily removable from computing device 600. Some or all of one or more batteries 624 can be rechargeable. For example, a rechargeable battery can be recharged via a wired connection between the battery and another power supply, such as by one or more power supplies that are external to computing device 600 and connected to computing device 600 via the one or more external power interfaces. In other examples, some or all of one or more batteries 624 can be non-rechargeable batteries.

One or more external power interfaces 626 of power system 622 can include one or more wired-power interfaces, such as a USB cable and/or a power cord, that enable wired electrical power connections to one or more power supplies that are external to computing device 600. One or more external power interfaces 626 can include one or more wireless power interfaces, such as a Qi wireless charger, that enable wireless electrical power connections, such as via a Qi wireless charger, to one or more external power supplies. Once an electrical power connection is established to an external power source using one or more external power interfaces 626, computing device 600 can draw electrical power from the external power source the established electrical power connection. In some examples, power system 622 can include related sensors, such as battery sensors associated with one or more batteries or other types of electrical power sensors.

### Example Data Network

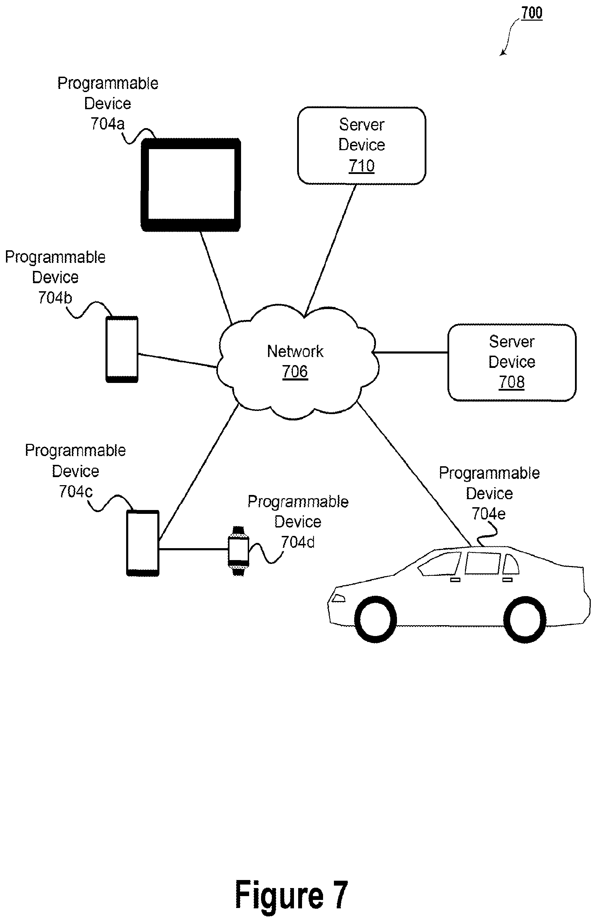

Figure 7 depicts a distributed computing architecture 700, in accordance with example embodiments. Distributed computing architecture 700 includes server devices 708, 710 that are configured to communicate, via network 706, with programmable devices 704a, 704b, 704c, 704d, 704e. Network 706 may correspond to a local area network (LAN), a wide area network (WAN), a WLAN, a WWAN, a corporate intranet, the public Internet, or any other type of network configured to provide a communications path between networked computing devices. Network 706 may also correspond to a combination of one or more LANs, WANs, corporate intranets, and/or the public Internet.

Although Figure 7 only shows five programmable devices, distributed application architectures may serve tens, hundreds, or thousands of programmable devices. Moreover, programmable devices 704a, 704b, 704c, 704d, 704e (or any additional programmable devices) may be any sort of computing device, such as a mobile computing device, desktop computer, wearable computing device, head-mountable device (HMD), network terminal, a mobile computing device, and so on. In some examples, such as illustrated by programmable devices 704a, 704b, 704c, 704e, programmable devices can be directly connected to network 706. In other examples, such as illustrated by programmable device 704d, programmable devices can be indirectly connected to network 706 via an associated computing device, such as programmable device 704c. In this example, programmable device 704c can act as an associated computing device to pass electronic communications between programmable device 704d and network 706. In other examples, such as illustrated by programmable device 704e, a computing device can be part of and/or inside a vehicle, such as a car, a truck, a bus, a boat or ship, an airplane, etc. In other examples not shown in Figure 7, a programmable device can be both directly and indirectly connected to network 706.

Server devices 708, 710 can be configured to perform one or more services, as requested by programmable devices 704a-704e. For example, server device 708 and/or 710 can provide content to programmable devices 704a-704e. The content can include, but is not limited to, web pages, hypertext, scripts, binary data such as compiled software, images, audio, and/or video. The content can include compressed and/or uncompressed content. The content can be encrypted and/or unencrypted. Other types of content are possible as well.

As another example, server device 708 and/or 710 can provide programmable devices 704a-704e with access to software for database, search, computation, graphical, audio, video, World Wide Web/Internet utilization, and/or other functions. Many other examples of server devices are possible as well.

### Cloud-Based Servers

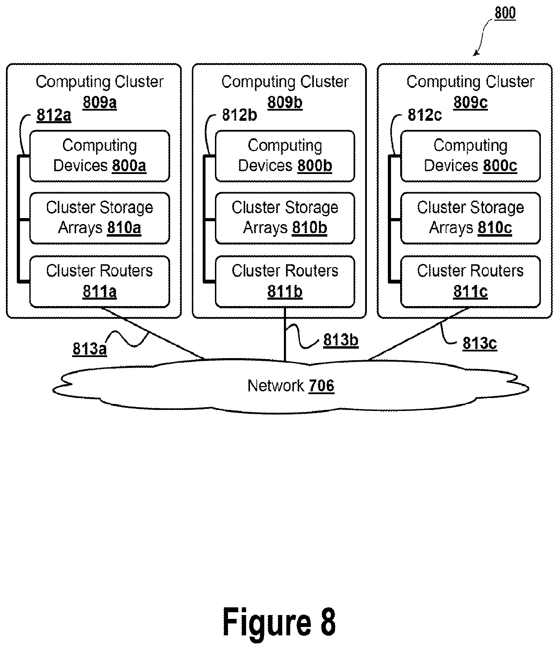

Figure 8 depicts a network 706 of computing clusters 809a, 809b, 809c arranged as a cloud-based server system in accordance with an example embodiment. Computing clusters 809a, 809b, and 809c can be cloud-based devices that store program logic and/or data of cloud-based applications and/or services; *e.g.,* perform at least one function of and/or related to machine learning model 120, trained machine learning model 150, method 900, and/or method 1000.

In some embodiments, computing clusters 809a, 809b, and 809c can be a single computing device residing in a single computing center. In other embodiments, computing clusters 809a, 809b, and 809c can include multiple computing devices in a single computing center, or even multiple computing devices located in multiple computing centers located in diverse geographic locations. For example, Figure 8 depicts each of computing clusters 809a, 809b, and 809c residing in different physical locations.

In some embodiments, data and services at computing clusters 809a, 809b, 809c can be encoded as computer readable information stored in non-transitory, tangible computer readable media (or computer readable storage media) and accessible by other computing devices. In some embodiments, computing clusters 809a, 809b, 809c can be stored on a single disk drive or other tangible storage media, or can be implemented on multiple disk drives or other tangible storage media located at one or more diverse geographic locations.

In Figure 8, functionality of a convolutional neural network, and/or a computing device can be distributed among computing clusters 809a, 809b, 809c. Computing cluster 809a can include one or more computing devices 800a, cluster storage arrays 810a, and cluster routers 811a connected by a local cluster network 812a. Similarly, computing cluster 809b can include one or more computing devices 800b, cluster storage arrays 810b, and cluster routers 811b connected by a local cluster network 812b. Likewise, computing cluster 809c can include one or more computing devices 800c, cluster storage arrays 810c, and cluster routers 811c connected by a local cluster network 812c.

In some embodiments, each of computing clusters 809a, 809b, and 809c can have an equal number of computing devices, an equal number of cluster storage arrays, and an equal number of cluster routers. In other embodiments, however, each computing cluster can have different numbers of computing devices, different numbers of cluster storage arrays, and different numbers of cluster routers. The number of computing devices, cluster storage arrays, and cluster routers in each computing cluster can depend on the computing task or tasks assigned to each computing cluster.

In computing cluster 809a, for example, computing devices 800a can be configured to perform various computing tasks of convolutional neural network, and/or a computing device. In one embodiment, the various functionalities of a convolutional neural network, and/or a computing device can be distributed among one or more of computing devices 800a, 800b, and 800c. Computing devices 800b and 800c in respective computing clusters 809b and 809c can be configured similarly to computing devices 800a in computing cluster 809a. On the other hand, in some embodiments, computing devices 800a, 800b, and 800c can be configured to perform different functions.

In some embodiments, computing tasks and stored data associated with a convolutional neural networks, and/or a computing device can be distributed across computing devices 800a, 800b, and 800c based at least in part on the processing requirements of convolutional neural networks, and/or a computing device, the processing capabilities of computing devices 800a, 800b, 800c, the latency of the network links between the computing devices in each computing cluster and between the computing clusters themselves, and/or other factors that can contribute to the cost, speed, fault-tolerance, resiliency, efficiency, and/or other design goals of the overall system architecture.

Cluster storage arrays 810a, 810b, 810c of computing clusters 809a, 809b, and 809c can be data storage arrays that include disk array controllers configured to manage read and write access to groups of hard disk drives. The disk array controllers, alone or in conjunction with their respective computing devices, can also be configured to manage backup or redundant copies of the data stored in the cluster storage arrays to protect against disk drive or other cluster storage array failures and/or network failures that prevent one or more computing devices from accessing one or more cluster storage arrays.

Similar to the manner in which the functions of convolutional neural networks, and/or a computing device can be distributed across computing devices 800a, 800b, 800c of computing clusters 809a, 809b, 809c, various active portions and/or backup portions of these components can be distributed across cluster storage arrays 810a, 810b, 810c. For example, some cluster storage arrays can be configured to store one portion of the data of a convolutional neural network, and/or a computing device, while other cluster storage arrays can store other portion(s) of data of a convolutional neural network, and/or a computing device. Also, for example, some cluster storage arrays can be configured to store the data of a first convolutional neural network, while other cluster storage arrays can store the data of a second and/or third convolutional neural network. Additionally, some cluster storage arrays can be configured to store backup versions of data stored in other cluster storage arrays.

Cluster routers 811a, 811b, 811c in computing clusters 809a, 809b, and 809c can include networking equipment configured to provide internal and external communications for the computing clusters. For example, cluster routers 811a in computing cluster 809a can include one or more internet switching and routing devices configured to provide (i) local area network communications between computing devices 800a and cluster storage arrays 810a via local cluster network 812a, and (ii) wide area network communications between computing cluster 809a and computing clusters 809b and 809c via wide area network link 813a to network 806. Cluster routers 811b and 811c can include network equipment similar to cluster routers 811a, and cluster routers 811b and 811c can perform similar networking functions for computing clusters 809b and 809b that cluster routers 811a perform for computing cluster 809a.

In some embodiments, the configuration of cluster routers 811a, 811b, 811c can be based at least in part on the data communication requirements of the computing devices and cluster storage arrays, the data communications capabilities of the network equipment in cluster routers 811a, 811b, 811c, the latency and throughput of local cluster networks 812a, 812b, 812c, the latency, throughput, and cost of wide area network links 813a, 813b, 813c, and/or other factors that can contribute to the cost, speed, fault-tolerance, resiliency, efficiency and/or other design criteria of the moderation system architecture.

### Example Methods of Operation

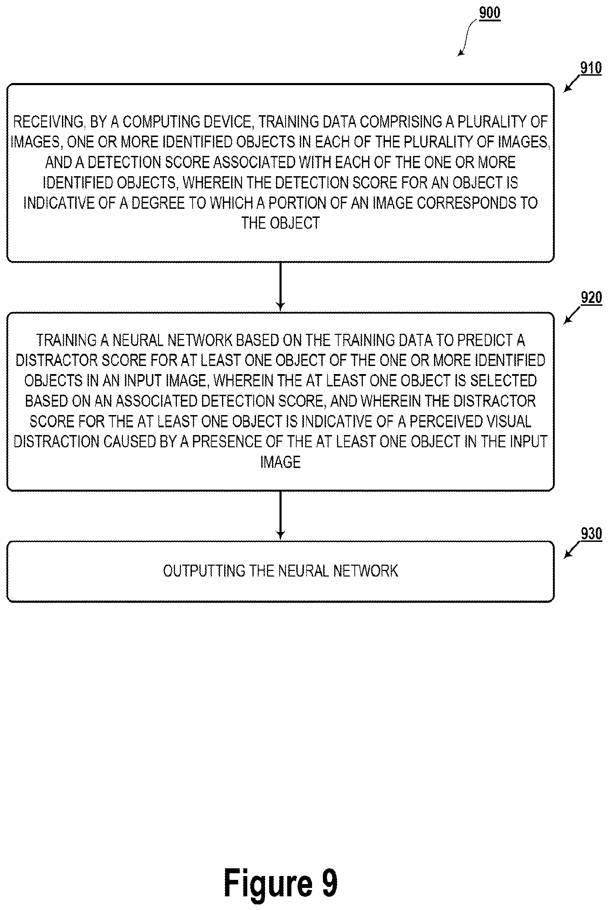

Figure 9 illustrates flow chart 900 of operations related to using audio processing stages provided by an operating system. The operations may be executed by and/or used with computing device 600, or other ones of the preceding example embodiments.

Block 910 involves receiving, by a computing device, training data comprising a plurality of images, one or more identified objects in each of the plurality of images, and a detection score associated with each of the one or more identified objects, wherein the detection score for an object is indicative of a degree to which a portion of an image corresponds to the object.

Block 920 involves training a neural network based on the training data to predict a distractor score for at least one object of the one or more identified objects in an input image, wherein the at least one object is selected based on an associated detection score, and wherein the distractor score for the at least one object is indicative of a perceived visual distraction caused by a presence of the at least one object in the input image.

Block 930 involves outputting the trained neural network.

In some embodiments, the receiving of the training data comprises receiving the training data from an object detection neural network.

In some embodiments, an identified object of the one or more identified objects may be associated with a rating of not distractive, unsure, distractive, or highly distractive. In such embodiments, the training of the neural network involves learning to predict the distractor score based on the rating.

In some embodiments, the training of the neural network to predict the distractor score involves determining, based on the predicted distractor score, whether the at least one object is an object of high significance in the input image.

In some embodiments, the one or more identified objects in each of the plurality of images may be located within respective bounding regions, wherein a bounding region is associated with a region coordinate indicative of a location and a size of the bounding region in the input image. In such embodiments, the training of the neural network to predict the distractor score for the given object may be based on a region coordinate of a bounding region corresponding to the at least one object. In such embodiments, the training of the neural network to predict the distractor score for the at least one object may be based on pairwise relations between region coordinates of a bounding region corresponding to the at least one object and region coordinates of another bounding region corresponding to another object of one or more identified objects in the input image.

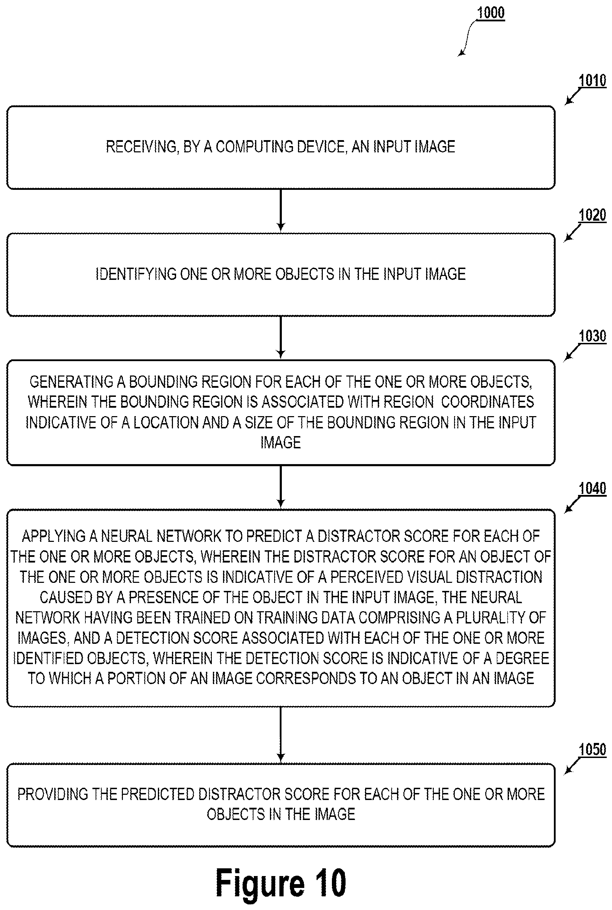

Figure 10 illustrates flow chart 1000, in accordance with example embodiments. The operations may be executed by and/or used with computing device 600, or other ones of the preceding example embodiments.

Block 1010 involves receiving, by a computing device, an input image.

Block 1020 involves identifying one or more objects in the input image.

Block 1030 involves generating a bounding region for each of the one or more objects, wherein the bounding region is associated with region coordinates indicative of a location and a size of the bounding region in the input image.

Block 1040 involves applying a neural network to predict a distractor score for each of the one or more objects, wherein the distractor score for an object of the one or more objects is indicative of a perceived visual distraction caused by a presence of the object in the input image, the neural network having been trained on training data comprising a plurality of images, one or more identified objects in each of the plurality of images, and a detection score associated with each of the one or more identified objects, wherein the detection score is indicative of a degree to which a portion of an image corresponds to an object in an image.

Block 1050 involves providing the predicted distractor score for each of the one or more objects in the input image.

In some embodiments, the identifying of the one or more objects includes identifying the one or more objects by an object detection neural network.

In some embodiments, the providing of the predicted distractor score comprises providing the input image with the one or more objects within respective bounding regions.

Some embodiments involve identifying, based on the predicted distractor score, an object, of the one or more objects, of high significance in the input image. In such embodiments, the identifying of the object of high significance may be based on a determination that a predicted distractor score for the object is below a threshold score. Such embodiments may involve modifying an image editing parameter to prevent removal of the object of high significance from the input image.

Some embodiments involve identifying, based on the predicted distractor score, an object, of the one or more objects, of low significance in the input image. In such embodiments, the identifying of the object of low significance may be based on a determination that a predicted distractor score for the object is above a threshold score. Such embodiments may involve providing, via a graphical user interface, a recommendation to remove the object of low significance from the input image. Such embodiments may also involve receiving a user indication to remove the object of low significance from the input image. Such embodiments may additionally involve, in response to the user indication, removing the object of low significance from the input image. In some embodiments, the removing of the object of low significance includes generating a segmentation mask of the object of low significance. In some embodiments, the removing of the object of low significance includes inpainting a region of the input image corresponding to the object of low significance as removed from the input image. In some embodiments, the removing of the object of low significance includes compositing the input image to maintain consistency with a background region of the input image.

In some embodiments, the predicted distractor score for a given object of the one or more objects may be based on a region coordinate of a bounding region corresponding to the given object.

In some embodiments, the predicted distractor score for a given object of the one or more objects may be based on pairwise relations between region coordinates of a bounding region corresponding to the given object and region coordinates of another bounding region corresponding to another object of one or more identified objects in the input image.

In some embodiments, the applying of the neural network to predict the distractor score is based on a conditional random field that models a context of an object in the input image.

Many of the above-described features and applications are implemented as software processes that are specified as a set of instructions recorded on a computer readable storage medium (also referred to as computer readable medium). When these instructions are executed by one or more processing unit(s) (e.g., one or more processors, cores of processors, or other processing units), they cause the processing unit(s) to perform the actions indicated in the instructions. Examples of computer readable media include, but are not limited to, magnetic media, optical media, electronic media, etc. The computer readable media does not include carrier waves and electronic signals passing wirelessly or over wired connections.

In this specification, the term "software" is meant to include, for example, firmware residing in read-only memory or other form of electronic storage, or applications that may be stored in magnetic storage, optical, solid state, etc., which can be read into memory for processing by a processor. Also, in some implementations, multiple software aspects of the subject disclosure can be implemented as sub-parts of a larger program while remaining distinct software aspects of the subject disclosure. In some implementations, multiple software aspects can also be implemented as separate programs. Finally, any combination of separate programs that together implement a software aspect described here is within the scope of the subject disclosure. In some implementations, the software programs, when installed to operate on one or more electronic systems, define one or more specific machine implementations that execute and perform the operations of the software programs.

A computer program (also known as a program, software, software application, script, or code) can be written in any form of programming language, including compiled or interpreted languages, declarative or procedural languages, and it can be deployed in any form, including as a standalone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

These functions described above can be implemented in digital electronic circuitry, in computer software, firmware, or hardware. The techniques can be implemented using one or more computer program products. Programmable processors and computers can be included in or packaged as mobile devices. The processes and logic flows can be performed by one or more programmable processors and by one or more programmable logic circuitry. General and special purpose computing devices and storage devices can be interconnected through communication networks.

Some implementations include electronic components, for example, microprocessors, storage, and memory that store computer program instructions in a machine-readable or computer-readable medium (alternatively referred to as computer-readable storage media, machine-readable media, or machine-readable storage media). Some examples of such computer-readable media include RAM, ROM, read-only compact discs (CD-ROM), recordable compact discs (CD-R), rewritable compact discs (CD-RW), read-only digital versatile discs (e.g., DVD-ROM, dual-layer DVD-ROM), a variety of recordable/rewritable DVDs (e.g., DVD-RAM, DVD-RW, DVD+RW, etc.), flash memory (e.g., SD cards, mini-SD cards, micro-SD cards, etc.), magnetic or solid state hard drives, read-only and recordable Blu-Ray^{®} discs, ultra-density optical discs, any other optical or magnetic media, and floppy disks. The computer-readable media can store a computer program that is executable by at least one processing unit and includes sets of instructions for performing various operations. Examples of computer programs or computer code include machine code, for example, is produced by a compiler, and files including higher-level code that are executed by a computer, an electronic component, or a microprocessor using an interpreter.

While the above discussion primarily refers to microprocessor or multi-core processors that execute software, some implementations are performed by one or more integrated circuits, for example, application specific integrated circuits (ASICs) or field programmable gate arrays (FPGAs). In some implementations, such integrated circuits execute instructions that are stored on the circuit itself.

As used in this specification and any claims of this application, the terms "computer", "server", "processor", and "memory" all refer to electronic or other technological devices. These terms exclude people or groups of people. For the purposes of the specification, the terms display or displaying means displaying on an electronic device. As used in this specification and any claims of this application, the terms "computer readable medium" and "computer readable media" are entirely restricted to tangible, physical objects that store information in a form that is readable by a computer. These terms exclude any wireless signals, wired download signals, and any other ephemeral signals.

To provide for interaction with a user, implementations of the subject matter described in this specification can be implemented on a computer having a display device, e.g., a CRT or LCD monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving a user input from a user interacting with the client device). Data generated at the client device (e.g., a result of the user interaction) can be received from the client device at the server.

It is understood that any specific order or hierarchy of steps in the processes disclosed is an illustration of example approaches. Based upon design preferences, it is understood that the specific order or hierarchy of steps in the processes may be rearranged, or that all illustrated steps be performed. Some of the steps may be performed simultaneously. For example, in certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language claims, where reference to an element in the singular is not intended to mean "one and only one" unless specifically so stated, but rather "one or more". Unless specifically stated otherwise, the term "some'' refers to one or more. Pronouns in the masculine (e.g., his) include the feminine and neuter gender (e.g., her and its) and vice versa. Headings and subheadings, if any, are used for convenience only and do not limit the subject disclosure.

As used herein, the phrase "at least one of" preceding a series of items, with the term "and" or "or" to separate any of the items, modifies the list as a whole, rather than each member of the list (e.g., each item). The phrase "at least one of" does not require selection of at least one of each item listed; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

Phrases such as an aspect, the aspect, another aspect, some aspects, one or more aspects, an implementation, the implementation, another implementation, some implementations, one or more implementations, an embodiment, the embodiment, another embodiment, some embodiments, one or more embodiments, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

All structural and functional equivalents to the elements of the various aspects described throughout this disclosure that are known or later come to be known to those of ordinary skill in the art are expressly incorporated herein by reference and intended to be encompassed by the subject technology. Moreover, nothing disclosed herein is intended to be dedicated to the public regardless of whether such disclosure is explicitly recited in the above description. No claim element is to be construed under the provisions of 35 U.S.C. § 112, sixth paragraph, unless the element is expressly recited using the phrase "means for" or, in the case of a method claim, the element is recited using the phrase "step for." Furthermore, to the extent that the term "include", "have", or the like is used in the description or the claims, such term is intended to be inclusive in a manner similar to the term "comprise" as "comprise" is interpreted when employed as a transitional word in a claim.
The following clauses form part of the description:
1. A computer-implemented method, comprising:
   receiving, by a computing device, training data comprising a plurality of images, one or more identified objects in each of the plurality of images, and a detection score associated with each of the one or more identified objects, wherein the detection score for an object is indicative of a degree to which a portion of an image corresponds to the object;
   training a neural network based on the training data to predict a distractor score for at least one object of the one or more identified objects in an input image, wherein the at least one object is selected based on an associated detection score, and wherein the distractor score for the at least one object is indicative of a perceived visual distraction caused by a presence of the at least one object in the input image; and
   outputting the trained neural network.
2. The computer-implemented method of clause 1, wherein the receiving of the training data comprises receiving the training data from an object detection neural network.
3. The computer-implemented method of clause 1, wherein an identified object of the one or more identified objects is associated with a rating of not distractive, unsure, distractive, or highly distractive, and wherein the training of the neural network comprises learning to predict the distractor score based on the rating.
4. The computer-implemented method of clause 1, wherein the training of the neural network to predict the distractor score further comprising:
   determining, based on the predicted distractor score, whether the at least one object is an object of high significance in the input image.
5. The computer-implemented method of clause 1, wherein the one or more identified objects in each of the plurality of images are located within respective bounding regions, wherein a bounding region is associated with a region coordinate indicative of a location and a size of the bounding region in the input image, and wherein the training of the neural network to predict the distractor score for the given object is based on a region coordinate of a bounding region corresponding to the at least one object.
6. The computer-implemented method of clause 5, wherein the training of the neural network to predict the distractor score for the at least one object is based on pairwise relations between region coordinates of a bounding region corresponding to the at least one object and region coordinates of another bounding region corresponding to another object of one or more identified objects in the input image.
7. A computer-implemented method, comprising:
   receiving, by a computing device, an input image;
   identifying one or more objects in the input image;
   generating a bounding region for each of the one or more objects, wherein the bounding region is associated with region coordinates indicative of a location and a size of the bounding region in the input image;
   applying a neural network to predict a distractor score for each of the one or more objects, wherein the distractor score for an object of the one or more objects is indicative of a perceived visual distraction caused by a presence of the object in the input image, the neural network having been trained on training data comprising a plurality of images, one or more identified objects in each of the plurality of images, and a detection score associated with each of the one or more identified objects, wherein the detection score is indicative of a degree to which a portion of an image corresponds to an object in an image; and
   providing the predicted distractor score for each of the one or more objects in the input image.
8. The computer-implemented method of clause 7, wherein the identifying of the one or more objects comprises identifying the one or more objects by an object detection neural network.
9. The computer-implemented method of clause 7, wherein the providing of the predicted distractor score comprises providing the input image with the one or more objects within respective bounding regions.
10. The computer-implemented method of clause 7, further comprising:
   identifying, based on the predicted distractor score, an object, of the one or more objects, of high significance in the input image.
11. The computer-implemented method of clause 10, wherein the identifying of the object of high significance is based on a determination that a predicted distractor score for the object is below a threshold score.
12. The computer-implemented method of clause 10, further comprising:
   modifying an image editing parameter to prevent removal of the object of high significance from the input image.
13. The computer-implemented method of clause 7, further comprising:
   identifying, based on the predicted distractor score, an object, of the one or more objects, of low significance in the input image.
14. The computer-implemented method of clause 13, wherein the identifying of the object of low significance is based on a determination that a predicted distractor score for the object is above a threshold score.
15. The computer-implemented method of clause 13, further comprising:
   providing, via a graphical user interface, a recommendation to remove the object of low significance from the input image;
   receiving a user indication to remove the object of low significance from the input image; and
   in response to the user indication, removing the object of low significance from the input image.
16. The computer-implemented method of clause 15, wherein the removing of the object of low significance comprises generating a segmentation mask of the object of low significance.
17. The computer-implemented method of clause 15, wherein the removing of the object of low significance comprises inpainting a region of the input image corresponding to the object of low significance as removed from the input image.
18. The computer-implemented method of clause 15, wherein the removing of the object of low significance comprises compositing the input image to maintain consistency with a background region of the input image.
19. The computer-implemented method of clause 7, wherein the predicted distractor score for a given object of the one or more objects is based on a region coordinate of a bounding region corresponding to the given object.
20. The computer-implemented method of clause 7, wherein the predicted distractor score for a given object of the one or more objects is based on pairwise relations between region coordinates of a bounding region corresponding to the given object and region coordinates of another bounding region corresponding to another object of one or more identified objects in the input image.
21. The computer-implemented method of clause 7, wherein the applying of the neural network to predict the distractor score is based on a conditional random field that models a context of an object in the input image.
22. A computing device, comprising:
   one or more processors; and
   data storage, wherein the data storage has stored thereon computer-executable instructions that, when executed by the one or more processors, cause the computing device to carry out operations comprising:
      receiving, by the computing device, an input image;
      identifying one or more objects in the input image;
      generating a bounding region for each of the one or more objects, wherein the bounding region is associated with region coordinates indicative of a location and a size of the bounding region in the input image;
      applying a neural network to predict a distractor score for each of the one or more objects, wherein the distractor score for an object of the one or more objects is indicative of a perceived visual distraction caused by a presence of the object in the input image, and the neural network having been trained on training data comprising a plurality of images, one or more identified objects in each of the plurality of images, and a detection score associated with each of the one or more identified objects, wherein the detection score is indicative of a degree to which a portion of an image corresponds to an object in an image; and
      providing the predicted distractor score for each of the one or more objects in the input image.

## Claims

1. A computer-implemented method, comprising:
receiving, by a computing device, an input image;
identifying one or more objects in the input image;
generating a bounding region for each of the one or more objects, wherein the bounding region is associated with region coordinates indicative of a location and a size of the bounding region in the input image;
selecting, from the one or more objects, at least one candidate object having an associated detection score higher than a threshold detection score;
applying a neural network to predict a distractor score for the at least one candidate object based on pairwise relations between region coordinates of a bounding region corresponding to the candidate object and region coordinates of another bounding region corresponding to another object of the one or more objects in the input image, wherein the distractor score for an object is indicative of a perceived visual distraction caused by a presence of the object in the input image;
identifying, based on the predicted distractor score, an object of low significance in the input image having a predicted distractor score exceeding a threshold distractor score; and
removing the object of low significance from the input image.

2. The computer-implemented method of claim 1, wherein removing the object of low significance from the input image comprises at least one of:
(i) generating a segmentation mask of the object of low significance;
(ii) inpainting a region of the input image corresponding to the object of low significance as removed from the input image; and
(iii) compositing the input image to maintain consistency with a background region of the input image.

3. The computer-implemented method of claim 1 or 2, wherein the input image is a preview image provided via a camera preview feature of the computing device, and wherein applying the neural network and removing the object of low significance are performed while the image is being previewed prior to image capture.

4. The computer-implemented method of any one of claims 1 to 3, wherein identifying the one or more objects in the input image comprises identifying the one or more objects by an object detection neural network.

5. The computer-implemented method of any one of claims 1 to 4, further comprising:
identifying, based on a predicted distractor score, an object of high significance in the input image having a predicted distractor score below a threshold score; and
modifying an image editing parameter of the computing device to prevent removal of the object of high significance from the input image.

6. The computer-implemented method of claim 5, further comprising:
providing, via a graphical user interface, a recommendation to lock the object of high significance from being edited; and
receiving a user indication to lock the object of high significance from being edited, wherein modifying the image editing parameter is performed in response to receiving the user indication.

7. The computer-implemented method of any one of claims 1 to 6, wherein removing the object of low significance from the input image comprises:
providing, via a graphical user interface, a recommendation to remove the object of low significance from the input image; and
receiving a user indication to remove the object of low significance from the input image, wherein removing the object of low significance is performed in response to receiving the user indication.

8. The computer-implemented method of any one of claims 1 to 7, wherein applying the neural network to predict the distractor score is based on a conditional random field that models a context of an object in the input image.

9. The computer-implemented method of any one of claims 1 to 8, wherein the neural network has been trained on training data comprising a detection score associated with each of the one or more identified objects, and wherein an identified object in the training data is associated with a rating of not distractive, unsure, distractive, or highly distractive.

10. The computer-implemented method of any one of claims 1 to 9, wherein providing the predicted distractor score comprises providing the input image with the one or more objects within respective bounding regions.

11. The computer-implemented method of any one of claims 1 to 10, wherein the input image is a video frame from a sequence of video frames in a video stream.

12. The computer-implemented method of any one of claims 1 to 11, wherein an object with a lowest predicted distractor score among the one or more objects in the input image is identified as an object of high significance.

13. A computing device, comprising:
one or more processors; and
data storage having stored thereon computer-executable instructions that, when executed by the one or more processors, cause the computing device to carry out the method of any one of claims 1 to 12.

14. A non-transitory computer-readable medium having stored thereon program instructions that, upon execution by one or more processors of a computing device, cause the computing device to carry out the method of any one of claims 1 to 12.

15. A computer program comprising instructions which, when executed by a computer, cause the computer to carry out the method of any one of claims 1 to 12.
